(19) **Europäisches Patentamt / European Patent Office / Office européen des brevets**

(11) **EP 2 570 032 B2**

(12) # NEW EUROPEAN PATENT SPECIFICATION
## After opposition procedure

(45) Date of publication and mention
of the opposition decision:
**06.12.2017 Bulletin 2017/49**

(45) Mention of the grant of the patent:
**26.03.2014 Bulletin 2014/13**

(21) Application number: **12275142.3**

(22) Date of filing: **14.09.2012**

(51) Int Cl.:
*A23F 5/12* (2006.01)   *B65D 85/804* (2006.01)

(54) **Coffee filter pod**

Kaffeefilterkapsel

Filtre à café à dosettes

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.09.2011 GB 201116146**

(43) Date of publication of application:
**20.03.2013 Bulletin 2013/12**

(73) Proprietor: **Kraft Foods R & D, Inc.
Deerfield, IL 60015 (US)**

(72) Inventors:
• **Mistry, Nimisha
Banbury, Oxfordshire OX16 1EN (GB)**
• **Antoniades, Costas
Littlemore, Oxford OX4 4TW (GB)**

(74) Representative: **Boult Wade Tennant
Verulam Gardens
70 Gray's Inn Road
London WC1X 8BT (GB)**

(56) References cited:
**EP-A1- 0 904 717       EP-A1- 1 859 683
EP-A1- 1 882 432       WO-A1-2007/030228
WO-A1-2008/121489       US-A1- 2009 145 988**

• **"Ensuring precision in the grinding process", COFFEE AND COCOA INTERNATIONAL, December 2006 (2006-12), pages 33-35, XP002689491,**
• **'The challenge of grinding coffee for pods ad capsules' TEE & COFFEE ASIA no. 2, 01 May 2009 - 31 July 2009, pages 26 - 28**

EP 2 570 032 B2

**Description**

The present invention relates to a filter pad for producing a short coffee beverage from roast and ground coffee. In particular, the invention relates to a filter pad able to produce an espresso or ristretto in a low pressure beverage machine.

Espresso-type beverages are short concentrated drinks with a strong coffee taste that are very popular with consumers. The production of an espresso has always been associated with high pressures and until fairly recently it was only possible to obtain espresso beverages using expensive high-pressure brewing machines in cafes. More recently, it has been possible to obtain the desired high pressures in home brewing machines which rely on impermeable cartridges and injection means to allow the provision of pressures in excess of 9 bar. These "closed" brewing machines have permitted the production of, amongst other beverages, espresso drinks in the consumers' homes.

EP1882432 discloses a method of decreasing the delivery time of an espresso-type beverage from a high-pressure machine. The technique involves minimising the presence of fines in the ground coffee to affect the percolation rate through the bed of coffee. The aim of EP1882432 is to increase the rate at which a fixed volume of beverage medium can flow through a cartridge and relies upon a puncture resistant membrane to increase the pressure in the coffee bed to result in a faster extraction.

US2009/0145988 relates to a method of grinding coffee beans to achieve a particle size distribution suitable for producing an espresso beverage from a cartridge in a high pressure beverage machine (over 10 Bar). The relative volume of particles in the first and second peaks depicted and discussed in US2009/0145988 indicate a volume of fines lower than disclosed herein. There is no appreciation in US2009/0145988 of the volume of fines disclosed herein.
Furthermore, there is no appreciation that the specific plurimodal volume distribution density disclosed herein can allow for low pressure espresso beverage production, in particular, from a soft filter pod.

"Ensuring precision in the grinding process", Coffee & Cocoa International, December/January 2006, pages 33-35, relates to a multi-roller grinding system as disclosed in US2009/0145988. This configuration of rollers is said to provide a narrower particle size distribution for each peak in a plurimodal grind size distribution. However, the grinds disclosed are for pods with short extraction times such as used in high pressure brewer systems. Furthermore, there is no appreciation of the volume of fines disclosed herein, or that these can permit the preparation of an espresso beverage in a low pressure machine.

EP1859683 discloses a coffee pod for use in a standard low-pressure beverage machine, comprising roast ground coffee and instant coffee.

High pressure brewing machines are complex and expensive to buy. Moreover, it would be advantageous for consumers to be able to produce a range of beverages from their existing low pressure machines without requiring a second beverage preparation machine or equipment such as specific adapters for their existing machine. Accordingly, there is a desire amongst consumers to produce a short coffee beverage without the use of a high pressure brewer. It is an object of the present invention to address this problem, tackle the disadvantages associated with the prior art, or at least provide a commercially useful alternative thereto.

Accordingly, in a first aspect, the present disclosure provides a coffee filter pod according to claim 1.

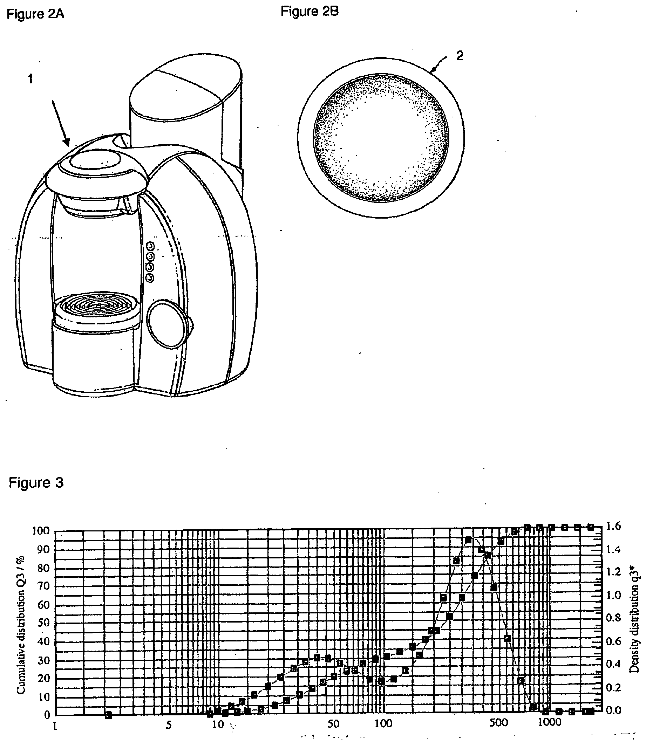

A volume distribution density can be plotted as a volume distribution density curve. The x-axis shows the particle diameters (as determined by laser diffraction) in microns and the y-axis shows a density distribution (preferably normalised). The area under the curve indicates the relative volume of particles having a given range of particle diameters. An example plot is shown in figure 3.

In the following passages different aspects/embodiments are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous.

The present inventors have sought to provide an authentic coffee-shop-style short coffee beverage for consumers to make at home. Such short beverages include espresso and ristretto. An espresso is an aromatic flavourful short coffee drink with a crema layer and significant in-cup body and mouth feel. Coffee shop Espresso beverages are typically 50 - 70 ml volume, have 2 - 6 wt % soluble solids and have a 3 - 6 mm layer of "crema". The crema preferably fully covers the coffee brew surface and persists for at least 1, preferably 2 minutes. A ristretto is typically a smaller espresso beverage having a volume of typically 30 - 50 ml.

The term "short coffee" beverage as used herein refers to a coffee beverage having a volume of from 25 to 75ml, more preferably from 30 to 70ml and most preferably either an espresso (50 - 70ml, more preferably 55 to 65ml, and most preferably about 60ml) or a ristretto (30 - 50ml, more preferably 35 to 45ml, and most preferably about 40ml). In contrast, a normal or standard coffee volume has a volume of around 120ml or greater. These values are the total volume produced in a single cycle intended for a single cup of beverage.

Roast and ground coffee is coffee that has been roasted and comminuted to provide an extractable product.

The techniques used to provide a suitable roasting for raw coffee beans are well known in the art. The grinding of coffee beans is also well know and various cutters and roller devices are used to prepare a finely ground coffee. It is preferable for the coffee beans to be kept chilled or cooled during grinding to minimise any undesirable scorching of the beans. Roast and ground coffee may be provided as a blend of different beans (Arabica or robusta, for example) and/or differently roasted beans.

Despite a long held belief that high pressures are essential for the production of an espresso beverage, the present inventors have discovered that a specific coffee grind can be used to produce a short coffee beverage from a low pressure machine. Without wishing to be bound by theory, it is believed that the grind provides the bimodal distribution of particles including larger particles and finer particles which form a packed bed of coffee and interact with the water so as to behave as if the pressure is higher than it actually is, especially in a low pressure brewing system. Moreover, the coffee bed might also "swell" on contact with hot water to have a secondary effect on increasing the pressure.

The provision of the specific particle size distribution of roast and ground coffee in a filter pod allows for easy handling. Furthermore, the filter pod allows for the roast and ground coffee to be constrained when placed in a brewing chamber to provide a tightly packed bed. At the same time, a flexible filter pod allows for the particles to move freely before the pod is placed in the brewing chamber allowing for dispersion and settling of the finer particles between the larger particles.

The inventors have found that specific peak values for the ground coffee sizes are essential to obtain a consistent and sufficient crema, and sufficient coffee solids in the reduced brew volume that is required when producing a short coffee. Through diligent experimentation the inventors have discovered the optimum design parameters for a low pressure coffee machine ingredient pod that optimises coffee solids extraction and allows the generation of sufficient crema, while delivering the required reduced brew volume.

Until now, the alternatives for producing a short beverage at home were: (1) to use a high pressure brewer on a short brew cycle (8bar); (2) to use a low pressure brewer (2bar) and produce an oversized beverage, or require the beverage to be split between beverage containers; or (3) use an adapter in a low pressure machine to influence the brewing cycle. The inventors have now provided a means to use an existing low pressure open On-Demand Filter Pod brew machine to produce an espresso-type beverage without the need to purchase additional machine parts (e.g. a separate pod holder). This roast and ground coffee blend is contained in a filter paper pad and packed as a single portion. A container holding several single portions for ready sale is also considered as a final commercial product. Such a pod can then used like any other filter pod: the pod is placed in the brew chamber of the low pressure machine; the brew chamber is closed around the pod; and the single cup delivery brew button is selected to deliver hot water, which passes through the pod to deliver the desired drink into a receptacle.

X50 is the particle size below which lie 50% of the particles by volume. X10 is the particle size below which lie 10% of the particles by volume. X90 is the particle size below which lie 90% of the particles by volume. These values can easily be obtained by the use of laser diffraction to characterise the dry coffee powder. Other techniques may be used, such as sieving, although such techniques do not lend themselves to easy statistical analysis.

A "low pressure" beverage machine as described herein is one that operates at a water pressure of from 1 to 3 bar, preferably less than 2 bar. High pressure machines typically operate at a pressure in excess of 8 bar.

The filter pod is a filter paper pad that comprises an upper sheet and a lower sheet sealed together around the periphery and enclosing the roast and ground coffee, wherein each of the upper and lower sheets is formed of filter paper. The use of a filter paper container is very cost effective. Such pads are easy to fill and malleable and can conform to the brewing chamber to provide a suitably packed coffee bed. For the avoidance of doubt, the brewing chamber as defined herein is the chamber formed around the pod in use. This will normally be formed by the pod support and the lid of the beverage machine. Preferably, when the brewing chamber is closed on the filter pod the pod is further compressed.

The particle size distribution (specifically a volume distribution density curve) is determined using a laser diffraction technique on the dry particles. This technique can be used to determine a cumulative distribution (see figure 3). The cumulative distribution can be converted into a volume distribution density curve. Such techniques are well known in the art and further details are provided in the Examples. The particle size distribution of the ground coffee can be measured using the laser diffraction software to determine the range of particle sizes and any peaks.

The particle size distribution is a bimodal distribution. All of the particles are associated with the two peaks. It is preferred that the first and second peaks are relatively clearly defined, that is, the standard deviation from the modal values (the highest points in each peak) is relatively low. In this way the properties of the final coffee bed can be strictly controlled and the inventors have found that the necessary packing of the bed can be ensured resulting in an effectively higher pressure-type extraction occurring.

Preferably the particles in the first peak have an X50 of from 30 to 60 microns. Preferably the particles in the second peak have an X50 of from 260 to 330 microns. The highest value in each peak in the volume distribution density curve corresponds to the mode value of particle sizes for that particular peak. The X50 values reflect the median values and do not necessarily correspond to the modal values. Preferably the peaks are substantially symmetrical so that the values do substantially correspond.

Preferably the particles in the first peak preferably have an X10 by volume of from 15 to 25 microns and an X90 by volume of from 80 to 120 microns. That is, while the first peak particles have an X50 of around 45 microns, the range of particle sizes in the first peak are substantially contained between about 20 and about 100 microns. Furthermore, the particles in the second peak preferably have an X10 by volume of from 150 to 200 microns and an X90 by volume of from 420 to 560 microns. That is, while the second peak particles have an X50 of around 295 microns, the range of particle sizes in the first peak are substantially contained between about 175 and about 490 microns.

Preferably the X50 for the whole roast and ground coffee is from 140 to 250 microns. More preferably the X50 is from 160 to 220 microns.

Preferably the volume of the particles in the first peak relative to the volume of the particles in the second peak is from 1.5:1 to 1:2, more preferably 1:1 to 1:2. This range has been found to provide a short coffee beverage without the risk of channelling (bypassing the coffee to produce a weak beverage) or having too high a flow resistance (insufficient beverage volume). In an alternative embodiment, the range may be from 2:1 to 1:1 and is then preferably used in a combination with an adapter to reduce the flow out of the pod to mitigate the effects of channelling and to ensure proper extraction: this can provide a stronger, lower-volume beverage.

As will be appreciated, the final short coffee beverage may be characterised by the volume of water that passes through the coffee and into the final beverage. Therefore, the amount of coffee in a pad is important to ensure that there are sufficient coffee solids in the final beverage. The coffee solids can also be increased by reducing the flow rate to allow for a longer extraction time, although this is not preferred in a home beverage machine due to consumer patience. Preferably the filter pod contains at least 6.3g of roast and ground coffee. This amount of coffee of the grind size described herein has been found to ensure that there are sufficient coffee solids in the final beverage produced using a volume of the beverage medium suitable for producing a short coffee beverage. Preferably the pod contains from 7-10g and more preferably from 7 to 9g and most preferably 7 to 8g. These amounts of coffee ensure that a thick mouthfeel is produced in the final espresso without leading to over-extraction or undesirable harsh notes. Where smaller volumes of coffee are used, such as 6.3 to 7g, a smaller diameter pod is preferred to ensure that a sufficient packing density is achieved.

Preferably the coffee has a tapped bulk density of from 300 to 400 g/l. The tap density is a measure of the natural packing density that can be achieved by allowing the coffee to settle without applying compressive force. Preferably the tap density is from 360 to 385g/l. The tap density is preferably less than the filled density since the coffee is preferably compacted a little in the final pod. The tap densities of the present coffee compositions are high, perhaps reflecting the efficient packing of the bimodal distribution of particles.

Preferably the filter pod has a filled dry coffee density of at least 360g/l. More preferably the fill density is from 400g/l to 600g/l. These fill densities are greater than the tap densities because some compression of the grind is applied during filling. However, despite the close packing of the ground coffee in the pod, the coffee is preferably not in the form of a compressed tablet. Indeed, it is considered that in a compressed tablet there may be insufficient movement of the fine particles to achieve the necessary final beverage properties. The filled dry coffee density may be calculated from the pod dimensions and fill weight (cross-sectional diameter) While not wishing to be bound by theory, it is believed that the slight cramming of the coffee into the pod, in addition to the sizing and possible swelling, serve to provide a suitable short beverage coffee from the pad.

According to a second aspect, there is provided a method of preparing a short coffee beverage, the method comprising:

placing the coffee filter pod as described herein in a brewing chamber of a beverage brewing machine, and passing a beverage medium through the pod to extract the roast and ground coffee.

Preferably the machine is a low pressure machine operating at from 1 to 3 bar. More preferably the machine operates at a pressure of from 1 to 2 bar. Beverage machines are generally configured to provide either a fixed volume of beverage medium (usually water at a temperature of from 70 to 100 °C, more preferably from 75 to 85°C) or to dispense the same beverage medium for a fixed period of time.

As will be appreciated, in a fixed volume beverage machine the fixed volume can be altered for each specific beverage type that is produced. A beverage pod may have a bar code, for example, so that the machine knows how much beverage medium is required. Thus, in order to produce a beverage from a pod as described herein, a fixed volume beverage machine would have to be aware (by reading the pod) or be instructed to provide a suitable amount of medium for a short beverage.

In a fixed time beverage machine the pump runs for the duration of a fixed brewing cycle and the final amount of beverage medium is determined by the flow resistance encountered through the brew chamber. Increased resistance leads to a reduced amount of beverage medium being pumped through the pod during the brew cycle. Thus, when producing a beverage from a pod as described herein, the particle grind size leads to increased flow resistance. As a result, the pod may be used to create a short coffee beverage in a brewing cycle designed to produce a standard (such as 120ml+) coffee beverage from a standard coffee pod.

Furthermore, the beverage produced has an excellent mouthfeel and taste like a coffee-shop espresso. Obviously, a fixed time brewer may also have alternative cycles for running for a reduced or increased amount of time. In one embodiment, the pod may be used with an adapter to reduce the flow through the pod and to provide a smaller, preferably ristretto, beverage.

Preferably the brewing chamber has an inlet and an outlet and wherein the pressure drop in the beverage medium in use between the inlet and the outlet through the pod is from 0.2 to 0.8 bar. Preferably the drop is from 0.3 to 0.6 bar. The pressure drop is the result of the particle size distribution and the effective density of the packed pod (fill density). The narrow and low pressure drop reflects the increased effective pressure that can be obtained even in a low pressure brewing machine and leads to a short coffee of the desired strength and mouthfeel.

Preferably the inlet superficial velocity is from 0.5 to 2.0 mm/s. More preferably, the inlet superficial velocity is 0.6 to 1.8 mm/s and most preferably from 0.9 to 1.2 mm/s. This is determined from the average volumetric flow of beverage medium passing through the pod across the brew cycle divided by the cross sectional inlet flow area of the pod contacted with the beverage medium. In a fixed time brewing cycle the range of velocities reflect the final volume and the degree of coffee solid extraction that can be achieved as the beverage medium passes through the coffee. In a fixed volume brewing cycle, the velocities particularly reflect the extraction achieved.

A preferred brew cycle duration is from 15 to 30 seconds, more preferably about 17-21 seconds of brewing time and a further 3-5 seconds to allow the beverage to drain fully from the pod (i.e. 20 to 26 second brew cycle). This duration provides a high beverage quality while meeting the requirements and expectations of the consumer.

According to a third aspect there is provided a system for producing an espresso beverage, the system comprising a beverage brewing machine and a coffee filter pad as described herein.

According to a fourth aspect there is provided the use of a roast and ground coffee having a bimodal particle size distribution to decrease the final beverage volume in a fixed-time brewing beverage machine. Because a fixed time brewing machine only provides the beverage medium for a fixed amount of time, increasing the flow resistance decreases the final beverage volume. The use of a bimodal coffee grind has been found to allow for an appropriately packed bed to generate both the beverage volume and the quality desired. Preferably the coffee used satisfies the parameters of the grind of coffee described herein. The use is to prepare short coffee beverage on a brewing cycle configured for a standard size coffee beverage, preferably an espresso beverage. In this way a consumer can create an espresso from their usual machine without needing to use a specific short-coffee adapter and without needing to run a specific program. Because the short beverage is the automatic product of passing a beverage medium through the pod, there is no need for a barcode or other means to identify the pod to the machine and, as a result, manufacturing costs of the pod are minimised.

According to a further aspect there is provided a method for producing a coffee filter pod as described herein, the method comprising:

providing first and second sheets of filter paper;
adding roast and ground coffee to the first sheet of filter paper;
sealing the second sheet of filter paper to the first to enclose the roast and ground coffee. The ground coffee is as described herein, preferably having a bimodal distribution of particles. Preferably the first sheet of filter paper is placed in a mould. The coffee is preferably added and then tamped down before the second sheet is sealed to the first around the periphery.

The disclosure is suitable for use with any coffee or any degree of roast including decaffeinated beans. The selection of beans will be determined by the desired flavour profile and intensity of the final beverage. Furthermore, it will be appreciated that further ingredients may additionally be present in the filter pod. Further ingredients may be selected from one or more of foamers, creamers, flavourings (such as mint, chocolate, hazelnut, vanilla, butterscotch, and the like). Suitable ingredients are well known in the art. The presence of a foamer (or foaming agent) may be preferred to help provide sufficient crema. The amounts of these additives would be readily determined by one skilled in the art and preferably are from 1 to 10 wt% in total of the contents of the pod.

The presence of soluble coffee as an alternative additive (optionally in addition to those mentioned above) may be preferred to help increase the strength of the finished beverage. However, it has been found that when the additional soluble coffee is greater than 20% by weight of the filter pod content the extraction of the roast and ground coffee may be hindered. Preferably the soluble coffee content is less than 20wt%, more preferably less than 15wt%, more preferably less than 10% and, where present, at least 1 wt% more preferably at least 5wt%.

Non-limiting embodiments of the present disclosure will now be described, by way of example only, with reference to the accompanying drawings, in which:

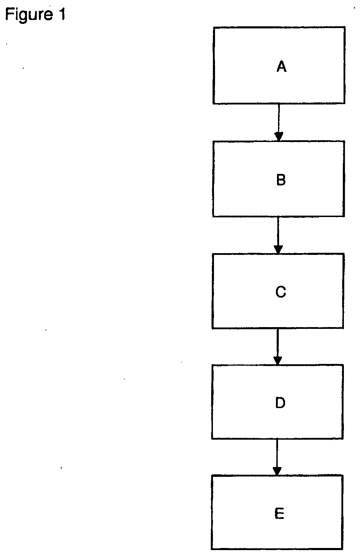

Figure 1 shows a flow chart identifying steps in the method described herein.

Figure 2A shows an example beverage brewing machine (1) and figure 2B shows an example of a filter paper pouch (2).

Figure 3 shows an exemplary particle size distribution as provided by the analytical software of a laser diffraction suite.

The method as described herein may include the following steps. Firstly, coffee beans (A) are provided. These beans (A) are then roasted to a desired level of roast to provided roasted beans (B). The roasted beans (B) are then ground to the desired grind size to provide ground coffee (C). The ground coffee (C) is packaged into filter paper pads (D). The filter paper pads (D) are shipped to customers, often in a bulk packaging. The customers place a pad (D) into their beverage machine and brew a hot beverage medium through the pad (D) to produce a final beverage (E).

The disclosure will now be further illustrated in the following non-limiting examples.

## Examples

Ten samples of roasted coffee were finely ground and the fine grind of the coffee was characterised using various techniques.

## Laser diffraction

The diffraction of a laser light beam is dependent on the size of particles passing through it. A suitable detector & computer system convert the beam diffraction pattern into a particle size distribution. A Sympatec Helos laser diffraction particle size measurement system was used with a Rodos dry dispersion unit for powders and computer interface plus hardware to run the data logging & calculation software.

The procedure and settings used were as recommended by the manufacturer for the type and size range of product being measured. The sample size poured into the dispersing system was around 10 - 20g. A lens with a focal length of 1000 mm, suitable for particle sizes between 9 - 1759 microns was used.

Logging, calculation & presentation of the data are carried out by the software provided by the manufacturer. This is set to calculate & present values for "Q3" - a normalised particle volume distribution - and its first derivative, q3 - a particle volume distribution density. For the purposes of these calculation, the software is set to assume the particles of roast & ground coffee are spherical. This is considered a reasonable assumption from close inspection (by microscopy) of the ground coffee powder. The values for X50, X10 and X90 can be obtained directly from the outputted information. Figure 3 shows both a typical cumulative volume distribution curve, normalised and plotted on a logarithmic abscissa scale, and a volume distribution density curve, plotted on a logarithmic abscissa scale, showing its bimodality.

When measured dry using laser diffraction, the coffee samples displayed a bimodal log-normal volume distribution density. These bimodal distributions were modelled as the additive combination of 2 separate, underlying monomodal log-normal distributions. Using a least squares methodology, the constants for each of these distributions can be estimated. The use of two constants for each peak, plus the ratio expressing the additive combination of each notional distribution, allows for the absolute characterisation of each grind. That is, 5 parameters describe completely the particle size distribution required of the roast & ground coffee to be filled into the pod. Optimal parameters are included in the table below (table 1).

| Bimodal Log-Normal Model Parameters | | | | | Equivalent X50 (μm) |
|---|---|---|---|---|---|
| | Upper Mode μ | Upper Mode σ | Lower Mode μ | Lower Mode σ | Ratio-Upper/ Lower | |
| Min. | 5.57 | 0.40 | 3.65 | 0.60 | 1.1 | 142 |
| Max | 5.79 | 0.42 | 3.84 | 0.68 | 1.9 | 244 |

For ease of understanding, however, it is possible to express the model parameters in terms of values for the X10, X50 and X90 of each peak, providing an equivalent to the mean and standard deviation provided by the forgoing model.

Commercially available statistical curve-fitting software can be used to carry out a least squares fit of the normalised cumulative volume distribution curve data to the following model equation:

$$Q_3 = \{r/(r + 1)\} * LND(x; \mu_{upper}; \sigma_{upper}) + \{1/(r + 1)\} * LND(x; \mu_{lower}; \sigma_{lower})$$

where:

Q3 = The normalised cumulative volume of particles below a particle size of x [%]
x = Particle size [microns]
r = Model additive combination upper/lower mode ratio
LND = Is an abbreviation representing the cumulative distribution function of a log-normal distribution with the following parameters:
$\mu$ = mean value of ln(x) - the natural logarithm of x.
$\sigma$ = standard deviation of ln(x) - the natural logarithm of x.

The formula can be found in standard statistical texts.

It would be appreciated by a person skilled in the art that a mass distribution density curve will have the same form as a volume distribution density. Furthermore, interchange between the specific values may be achieved based on the density of the coffee sample under consideration.

### Tapped density

Tapped bulk density is the sample weight in grams per unit volume (g/l) under tapped conditions.

A sample is poured into a graduated cylinder which is tapped a defined number of times. The compacted volume and weight are recorded and the density is calculated based on this. Measurement is carried out using a Tap Volumeter (e.g. Stampfvolumeter STAV 2003, J. Engelsmann AG, Germany), 250 ml graduated glass cylinder, round base, suitable for tap volumeter equipment, Powder funnel, Balance (minimum accuracy 0.01 g).

The method involves the following steps:

1. 1. Place the retaining ring from the Volumeter over the empty graduated cylinder and tare on the balance,
2. 2. Using the powder funnel, pour between 230-240 ml of sample into the cylinder. Allow the sample to fall freely into the cylinder. Avoid any vibration during the filling process,
3. 3. After removing the powder funnel weigh the cylinder with the sample and note the weight,
4. 4. Set the counter of the volumeter for 86 strokes,
5. 5. Start the machine. After the set number of strokes has been completed read off the compacted volume.

$$DT = (M / VT) * 1000$$

where:

DT = Tapped Bulk Density [g/L]
M = Weight of sample [g]
VT = Compacted sample volume [ml]

### Measuring flow

Hot Water Flow Rate, $q = Vc / t$ [ml/s]
Vc is the coffee volume delivered and t is the brew cycle time.

Hot Water Superficial Velocity, $Vs = 1000 * q / A$ [mm/s]
A is the water flow inlet cross-sectional area of the pod in $m^2$, i.e. $\pi r^2$

The pressure drop can be measured by determining the pressure between the inlet and outlet pad face using standard measurement techniques in the art.

### Filled dry coffee density

Pod Volume, $Vp = A * H$ [l]
Filled Dry Coffee Density, $\rho c = M / Vp$ [g/l]

h is the depth of the pod (coffee bed) when clamped into the brew chamber.

**The samples**

The beverages were then used to prepare a beverage in a reference brewer on a single cup brew cycle. The brewer used was a standard filter pad type brewer working on a fixed time delivery.

| | 1 | 2 | 3 | 4 | 5 | 6 | 7 | 8 | 9 | 10 |
|---|---|---|---|---|---|---|---|---|---|---|
| Peak 1 - X50 ($\mu$m) | 46 | 46 | 42 | 42 | 42 | 38 | 46 | 38 | 38 | 38 |
| Peak 1 - X10 ($\mu$m) | 19 | 20 | 19 | 19 | 19 | 18 | 19 | 18 | 18 | 18 |
| Peak 1 - X90 ($\mu$m) | 111 | 103 | 93 | 93 | 93 | 83 | 111 | 83 | 83 | 83 |
| Peak 2 - X50 ($\mu$m) | 326 | 304 | 295 | 295 | 295 | 261 | 326 | 261 | 261 | 261 |
| Peak 2 - X10 ($\mu$m) | 195 | 182 | 173 | 173 | 173 | 156 | 195 | 156 | 156 | 156 |
| Peak 2 - X90 ($\mu$m) | 544 | 508 | 505 | 505 | 505 | 437 | 544 | 437 | 437 | 437 |
| Peak 1: Peak 2 Ratio | 1:1.9 | 1:1.6 | 1:1.5 | 1:1.5 | 1:1.5 | 1:1.1 | 1:1.9 | 1:1.1 | 1:1.1 | 1:1.1 |
| Fill Weight (g) | 8.1 | 8.0 | 8.1 | 7.2 | 7.2 | 6.3 | 8.1 | 8.1 | 9.0 | 8.1 |
| Pod Diameter, D (mm) | 61 | 61 | 61 | 61 | 55 | 55 | 55 | 61 | 61 | 55 |
| Pod Height (mm) | 7 | 7 | 7 | 7 | 7 | 7 | 7 | 7 | 7 | 7 |
| Tapped density (g/l) | 334 | 360 | 363 | 363 | 363 | 383 | 334 | 383 | 383 | 383 |
| Filled Density, calc. (g/l) | 466 | 460 | 466 | 414 | 519 | 454 | 584 | 466 | 518 | 584 |
| Superficial Velocity (mm/s) | 1.1 | 1.1 | 0.9 | 1.1 | 1.2 | 1.2 | 1.5 | 0.7 | 0.6 | 0.8 |
| | | | | | | | | | | |
| Pressure Drop (bar) | 0.3 | 0.3 | 0.6 | 0.5 | 0.6 | 0.6 | 0.2 | 0.7 | 0.8 | 0.8 |
| Brew Volume (ml) | 65 | 62 | 53 | 66 | 57 | 58 | 70 | 42 | 35 | 37 |
| Soluble Solids (%) | 3.1 | 3.4 | 3.4 | 2.7 | 3.0 | 2.7 | 3.0 | 3.8 | 4.8 | 4.9 |
| Crema Height, Initial (mm) | 5 | 5 | 4 | 5 | 5 | 3 | 8 | 0 | 0 | 0 |
| Crema Height 2' Reduction (%) | 56 | 67 | 78 | 72 | 52 | 51 | 44 | - | - | - |

The beverages had excellent brew volumes.

While the coffee samples tested in the examples were produced in a single grinding step using a combination of rollers selected to give the desired particle size distribution, it will be appreciated that the samples could also be prepared by preparing two different homogeneous blends, each sized to correspond to the desired peaks in the desired bimodal distribution, and mixing them together: i.e. taking two monomodal blends and mixing them in the stated proportions.

Unless otherwise stated herein, all percentages and X10, X50 and X90 values are by volume.

Although preferred embodiments of the disclosure have been described herein in detail, it will be understood by those skilled in the art that variations may be made thereto without departing from the scope of the disclosure or of the appended claims.

**Claims**

1. A coffee filter pod containing roast and ground coffee, wherein the roast and ground coffee has a bimodal volume distribution density with a first peak of from 30 to 60 microns and a second peak of from 260 to 330 microns, wherein the ratio of the volume of the particles in the first peak relative to the volume of the particles in the second peak is from 2:1 to 1:2,

   wherein the filter pod comprises an upper sheet and a lower sheet sealed together around the periphery and enclosing the roast and ground coffee, wherein each of the upper and lower sheets is formed of filter paper.

2. The coffee filter pod according to claim 1, wherein:

(i) the particles in the first peak have an X50 of from 30 to 60 microns; and/or

(ii) the particles in the second peak have an X50 of from 260 to 330 microns.

3. The coffee filter pod according to claim 1 or claim 2, wherein:

(a) the particles in the first peak have an X10 by volume of from 15 to 25 microns and an X90 by volume of from 80 to 120 microns; and/or

(b) the particles in the second peak have an X10 by volume of from 150 to 200 microns and an X90 by volume of from 420 to 560 microns; and/or

(c) wherein the X50 of all of the roast and ground coffee particles is from 140 to 250 microns.

4. The coffee filter pod according to any of the proceeding claims, wherein ratio of the volume of the particles in the first peak relative to the volume of the particles in the second peak is from 1:1 to 1:2.

5. The coffee filter pod according to any of the preceding claims, wherein the filter pod contains at least 6.3g of roast and ground coffee and preferably from 7-10g.

6. The coffee filter pod according to any of the preceding claims, wherein:

(i) the filter pod has a filled dry coffee density of at least 360g/l; and/or

(ii) the coffee has a tapped bulk density of from 300 to 400 g/l.

7. A method of preparing a short coffee beverage, the method comprising:

placing the coffee filter pod according to any of claims 1 to 6 in a brewing chamber of a beverage brewing machine, and

passing a beverage medium through the pod to extract the roast and ground coffee.

8. The method according to claim 7, wherein the brewing chamber has an inlet and an outlet and wherein:

(I) the pressure drop in the beverage medium in use between the inlet and the outlet through the pod is from 0.2 to 0.8 bar; and/or

(II) the inlet superficial velocity is from 0.5 to 2.0 mm/s.

9. The method according to claim 7 or claim 8, wherein the machine is a low pressure machine operating at from 1 to 3 bar.

10. The method according to any of claims 7 to 9, wherein the final beverage has a brewed volume of from 25 to 75ml.

11. A system for producing an espresso beverage, the system comprising a beverage brewing machine and a coffee filter pad according to any of claims 1 to 6.

12. A method for producing a coffee filter pod according to any of claims 1 to 6, the method comprising:

providing first and second sheets of filter paper;

adding roast and ground coffee to the first sheet of filter paper;

sealing the second sheet of filter paper to the first to enclose the roast and ground coffee.

13. Use of a roast and ground coffee having a bimodal particle size distribution to decrease the final beverage volume in a fixed-time brewing beverage machine, to prepare a short coffee beverage on a brewing cycle configured for a standard size coffee beverage.

**Patentansprüche**

1. Kaffeefilterkapsel enthaltend gemahlenen Röstkaffee, wobei der gemahlene Röstkaffee eine bimodale Volumenverteilungsdichte mit einem ersten Peak von 30 bis 60 Mikrometer und einem zweiten Peak von 260 bis 330 Mikrometer aufweist, wobei das Verhältnis des Volumens der Teilchen im ersten Peak relativ zu dem Volumen der Teilchen im zweiten Peak 2:1 bis 1:2 beträgt,
wobei die Filterkapsel eine obere Lage und eine untere Lage umfasst, die miteinander um den äußeren Rand versiegelt sind und den gemahlenen Röstkaffee einschließen, wobei die obere und die untere Lage jeweils aus Filterpapier gebildet sind.

**2.** Kaffeefilterkapsel nach Anspruch 1, wobei:

(i) die Teilchen im ersten Peak eine X50 von 30 bis 60 Mikrometer aufweisen; und/oder (ii) die Teilchen im zweiten Peak eine X50 von 260 bis 330 Mikrometer aufweisen.

**3.** Kaffeefilterkapsel nach Anspruch 1 oder Anspruch 2, wobei:

(a) die Teilchen im ersten Peak eine X10, volumenbezogen, von 15 bis 25 Mikrometer aufweisen, und eine X90, volumenbezogen, von 80 bis 120 Mikrometer aufweisen; und/oder
(b) die Teilchen im zweite Peak eine X10, volumenbezogen, von 150 bis 200 Mikrometer, und eine X90, volumenbezogen, von 420 bis 560 Mikrometer aufweisen; und/oder
(c) wobei die X50 von allen gemahlenen Röstkaffeeteilchen von 140 bis 250 Mikrometer beträgt.

**4.** Kaffeefilterkapsel nach einem der vorangehenden Ansprüche, wobei das Verhältnis des Volumens der Teilchen im ersten Peak relativ zu dem Volumen der Teilchen im zweiten Peak von 1:1 bis 1:2 beträgt.

**5.** Kaffeefilterkapsel nach einem der vorangehenden Ansprüche, wobei die Filterkapsel mindestens 6,3 g gemahlenen Röstkaffee, und vorzugsweise von 7-10g enthält.

**6.** Kaffeefilterkapsel nach einem der vorangehenden Ansprüche, wobei:

(i) die Filterkapsel eine Trockenkaffeefülldichte von mindestens 360g/l aufweist; und/oder
(ii) der Kaffee eine Rüttelschüttdichte von 300 bis 400 g/l aufweist.

**7.** Verfahren zur Herstellung eines kurzen Kaffeegetränks, wobei das Verfahren umfasst:

Anordnen der Kaffeefilterkapsel nach einem der Ansprüche 1 bis 6 in einer Brühkammer einer Getränke-Brühmaschine, und
Hindurchgießen von Getränkemedium durch die Kapsel, um den gemahlenen Röstkaffee zu extrahieren.

**8.** Verfahren nach Anspruch 7, wobei die Brühkammer einen Einlass und einen Auslass aufweist und wobei:

(I) der Druckabfall im Getränkemedium bei Gebrauch zwischen Einlass und Auslass durch die Kapsel von 0,2 bis 0,8 bar beträgt; und/oder
(II) Die Einlass-Oberflächengeschwindigkeit von 0,5 bis 2,0 mm/s beträgt.

**9.** Verfahren nach Anspruch 7 oder Anspruch 8, wobei die Maschine eine Niederdruckmaschine ist, die bei 1 bis 3 bar arbeitet.

**10.** Verfahren nach einem der Ansprüche 7 bis 9, wobei das fertige Getränk ein Brühvolumen von 25 bis 75 ml aufweist.

**11.** System zur Herstellung eine Espresso-Getränks, wobei das System eine Getränkebrühmaschine und eine Kaffeefilterkapsel nach einem der Ansprüche 1 bis 6 umfasst.

**12.** Verfahren zur Herstellung einer Kaffeefilterkapsel nach einem der Ansprüche 1 bis 6, wobei das Verfahren folgendes umfasst:

Bereitstellen einer ersten und einer zweiten Lage von Filterpapier;
Zufügen von gemahlenem Röstkaffee zu der ersten Lage von Filterpapier;
Versiegeln der zweiten Lage von Filterpapier mit der ersten, um den gemahlenen Röstkaffee einzuschließen.

**13.** Verwendung eines gemahlenen Röstkaffee mit einer bimodalen Teilchengrößeverteilung, um ein Getränke-Endvolumen in einer Festzeit-Getränkebrühmaschine zu verringern, um ein kurzes Kaffeegetränk in einem Brühzyklus herzustellen, der auf ein Standardgrößen-Kaffeegetränk konfiguriert ist.

**Revendications**

1. Dosette filtre à café contenant du café torréfié et moulu, le café torréfié et moulu présentant une densité de répartition de volume bimodale avec un premier pic compris entre 30 et 60 micromètres et un deuxième pic compris entre 260 et 330 micromètres, le rapport du volume des particules dans le premier pic relativement au volume des particules dans le deuxième pic étant compris entre 2:1 et 1:2,
   la dosette filtre comprenant une feuille supérieure et une feuille inférieure scellées l'une à l'autre autour de la périphérie et enfermant le café torréfié et moulu, chacune des feuilles supérieure et inférieure étant constituée de papier filtre.

2. Dosette filtre à café selon la revendication 1, dans laquelle :

   (i) les particules dans le premier pic ont un X50 compris entre 30 et 60 micromètres ; et/ou
   (ii) les particules dans le deuxième pic ont un X50 compris entre 260 et 330 micromètres.

3. Dosette filtre à café selon la revendication 1 ou la revendication 2, dans laquelle :

   (a) les particules dans le premier pic ont un X10 en volume compris entre 15 et 25 micromètres et un X90 en volume compris entre 80 et 120 micromètres ; et/ou
   (b) les particules dans le deuxième pic ont un X10 en volume compris entre 150 et 200 micromètres et un X90 en volume compris entre 420 et 560 micromètres ; et/ou
   (c) le X50 de toutes les particules de café torréfié et moulu est compris entre 140 et 250 micromètres.

4. Dosette filtre à café selon l'une quelconque des revendications précédentes, dans laquelle le rapport du volume des particules dans le premier pic au volume des particules dans le deuxième pic est compris entre 1:1 et 1:2.

5. Dosette filtre à café selon l'une quelconque des revendications précédentes, la dosette filtre renfermant au moins 6,3 g de café torréfié et moulu et, de préférence, de 7 à 10 g.

6. Dosette filtre à café selon l'une quelconque des revendications précédentes, où :

   (i) la dosette filtre a une densité de café sec remplie d'au moins 360 g/l ; et/ou
   (ii) le café a une masse volumique en vrac après tassement comprise entre 300 et 400 g/l.

7. Procédé pour préparer une boisson café court, le procédé comprenant les étapes consistant à :

   placer la dosette filtre à café selon l'une quelconque des revendications 1 à 6 dans une chambre d'infusion d'une machine à infusion de boissons, et
   faire passer un milieu boisson à travers la dosette pour extraire le café torréfié et moulu.

8. Procédé selon la revendication 7, dans lequel la chambre d'infusion comporte une entrée et une sortie et dans lequel :

   (i) la chute de pression dans le milieu boisson à l'utilisation entre l'entrée et la sortie à travers la dosette est comprise entre 0,2 et 0,8 bar ; et/ou
   (ii) la vitesse superficielle d'entrée est comprise entre 0,5 et 2,0 mm/s.

9. Procédé selon la revendication 7 ou la revendication 8, dans lequel la machine est une machine à basse pression fonctionnant à une pression comprise entre 1 et 3 bars.

10. Procédé selon l'une quelconque des revendications 7 à 9, dans lequel la boisson finale a un volume infusé compris entre 25 et 75 ml.

11. Système pour produire une boisson expresso, le système comprenant une machine à infusion de boissons et une dosette filtre à café selon l'une quelconque des revendications 1 à 6.

**12.** Procédé pour produire une dosette filtre à café selon l'une quelconque des revendications 1 à 6, le procédé comprenant les étapes consistant à :

prévoir des première et deuxième feuilles de papier filtre ;
ajouter du café torréfié et moulu sur la première feuille de papier filtre ;
sceller la deuxième feuille de papier filtre sur la première feuille afin d'enfermer le café torréfié et moulu.

**13.** Utilisation d'un café torréfié et moulu présentant une répartition de taille de particules bimodale afin de réduire le volume de boisson final dans une machine de boissons à infusion de durée fixe, afin de préparer une boisson café court en un cycle d'infusion conçu pour une boisson café de taille standard.

Figure 1

EP 2 570 032 B2

Figure 2A

Figure 2B

Figure 3

14

**EP 2 570 032 B2**

REFERENCES CITED IN THE DESCRIPTION

**Patent documents cited in the description**

- EP 1882432 A
- US 20090145988 A
- EP 1859683 A